# EUROPÄISCHE PATENTANMELDUNG

(11) **EP 2 248 593 A2**
(43) Veröffentlichungstag der Anmeldung: **10.11.2010**
(21) Anmeldenummer: 10004460.1
(22) Anmeldetag: 27.04.2010
(51) Int. Cl.: B02C 17/18

(54) **Verfahrenstechnische Anlage für den Laborbetrieb**

(30) Priorität: 06.05.2009 DE 102009019868
(71) Anmelder: HOSOKAWA ALPINE Aktiengesellschaft, 86199 Augsburg (DE)
(72) Erfinder: Konetzka, Georg, Dipl.-Ing., Ing., 86199 Augsburg (DE); Kiederle, Gerhard, Dipl.-Ing. FH, 86517 Wehringen (DE)

(57) **Zusammenfassung**

Die Erfindung betrifft eine verfahrenstechnische Anlage für den Laborbetrieb, die aus einem Gestell (3) besteht und wahlweise mit unterschiedlichen Aufbereitungsmaschinen ausgestattet werden kann und sowohl für die Nass- wie für die Trockenaufbereitung eingesetzt werden kann. Am Anlagengestell ist ein Adapter (6) vorgesehen an dem wahlweise unterschiedliche Maschinen befestigt werden können, wobei zum Betrieb der Maschine erforderliche Medien wie Luft und Wasser durch den Adapter geführt werden.

## Beschreibung

Die Erfindung betrifft eine verfahrenstechnische Anlage für den Laborbetrieb, die aus einem Gestell besteht und wahlweise mit unterschiedlichen Aufbereitungsmaschinen ausgestattet werden kann und sowohl für die Nass- wie für die Trockenaufbereitung eingesetzt werden kann.

Bei der Entwicklung von innovativen Produkten stehen auf Grund ihrer Herstellungskosten und auf Grund ihrer hohen Wirksamkeit nur geringe Materialmengen zur Verfügung. Für die Entwicklung dieser Produkte und ihrer Herstellungsprozesse werden nicht nur Kleinstmaschinen benötigt, sondern komplette verfahrenstechnische Anlagen für Kleinstmengen, bei denen alle Komponenten aufeinander abgestimmt sind; wie z.B. eine Zerkleinerungsmaschine mit nachgeschaltetem Sichter und Filtereinheit. Dieses ermöglicht eine durchgehende Prozessvalidierung von der Forschung bis zur Produktion.

Labormaschinen sind bekannt, sie werden einzeln mit notwendigen Peripheriegeräten zusammengestellt. Häufig sind die Komponenten nicht aufeinander abgestimmt und nehmen viel Platz in Anspruch. Sie sind deshalb nicht einfach zu handhaben, speziell bei der Reinigung, Montage und Demontage.

Nachteilig hierbei ist, dass es sich um Einzelmaschinen mit eigenem Gehäuse handelt, die in einer Anlage mit der Peripherie wie Rührmaschinen, Abscheider und einem zugehörigen Schaltschrank zusammengestellt werden. Alternativ wird das Produkt nacheinander auf die Einzelmaschinen aufgegeben. Diese Vorgehensweise erschwert das Handling und die Reinigung. Außerdem ist es nicht immer möglich die gewonnenen Erkenntnisse auf den Pilotmaßstab oder Produktionsmaßstab zu übertragen.

Der Erfindung liegt daher die Aufgabe zugrunde, eine Lösung zu schaffen, die es ermöglicht verfahrenstechnische Anlagen für den Laborbetrieb bereitzustellen, die kompakt aufgebaut sind, universell für unterschiedliche Maschinen einsetzbar sind und einfach zu handhaben sind.

Bei einer verfahrenstechnischen Anlage für den Laborbetrieb der eingangs beschriebenen Art wird die Aufgabe erfindungsgemäß dadurch gelöst, dass am Gestell der Anlage ein Adapter vorgesehen ist, an dem wahlweise unterschiedliche Maschinen befestigt werden können, wobei zum Betrieb der Maschine erforderliche Medien wie Luft und Wasser durch den Adapter geführt werden.

Die erfindungsgemäße verfahrenstechnische Anlage die speziell im Laborbetrieb zum Einsatz kommt, weist ein Gestell auf, an dem alle benötigten Anlagenkomponenten angeordnet sind. Die Anlage kann so sehr kompakt gebaut werden. Des Weiteren weist das Gestell der Anlage einen Adapter auf, der zur Befestigung von aufbereitungstechnischen Maschinen dient. Die Anlage kann so auf unterschiedliche an die Aufgabenstellung angepasste Maschinen umgerüstet werden. Aufbereitungsmaschinen benötigen zum Betrieb Medien wie Luft zur Spülspaltspülung oder als Mahlluft oder Wasser als Kühlwasser oder Sperrmedium für Gleitringdichtungen. Diese Medien werden den Maschinen mit Schläuchen zugeführt. Bei der erfindungsgemäßen Anlage werden die Medien zentral der Anlage zugeführt, danach aufgeteilt und über den Adapter zwischen Gestell und Maschine der Maschine zugeführt. Dadurch können die unterschiedlichen Schläuche eingespart werden, die Anlage ist übersichtlich aufgebaut, leicht zu bedienen und zu reinigen.

Als Maschinen für die Anlage können wahlweise Maschinen zur Trockenaufbereitung oder zur Nassaufbereitung eingesetzt werden. So kann die Anlage entsprechend ihres Einsatzzweckes von einer Nassaufbereitungsanlage zu einer Trockenaufbereitungsanlage umgerüstet werden und umgekehrt. Als Aufbereitungsmaschinen können u.a. Nassmühlen unterschiedlichster Bauart eingesetzt werden, sowie Trockenmühlen, Schneidmühlen, Sichtermühlen, Windsichter, Mischer, mechano-chemische Reaktoren aber auch Kompaktoren. So lassen sich sowohl Pulver als auch Suspensionen verarbeiten.

Mit der erfindungsgemäßen verfahrenstechnischen Anlage können Aufbereitungsprozesse diskontinuierlich aber auch kontinuierlich durchgeführt werden. Die Anlage kann beliebig mit weiteren Komponenten wie Aufgabevorrichtungen, Abscheidern, Zwischenbehältern oder Pumpen erweitert werden. Die Anlagenkomponenten befinden sich geschützt innerhalb einer gut zu reinigenden Halbschale mit Bedienkonsole. Diese Anlagenteile können über formschlüssige Halterungen mit dem Gestell verbunden werden, alternativ können weitere Komponenten, wie z. B. Filter, direkt an den Maschinen befestigt werden. Dadurch, dass die Anlagenteile ortsfest sind, können kurze und übersichtliche Verbindungen zwischen den Komponenten hergestellt werden, so dass die Anlage übersichtlich bleibt und einfach zu bedienen ist.

Die Maschinen werden über einen Adapter an dem Maschinegestell angebracht. Dieser Adapter besitzt Bohrungen, durch die die Medien, wie Luft und Wasser, die zum Betreiben der Maschine notwendig sind, zur Maschine geführt werden. Das Adapterstück kann als Drehdurchführung mit Ringleitungen ausgeführt sein. Dadurch wird ermöglicht, dass die Maschine z.B. zum Befüllen, Entleeren, Reinigen, Montieren oder Demontieren in die richtige Lage gedreht werden kann. Außerdem ist der Adapter so ausgeführt, dass er die Maschine in der richtigen Einbaulage und verdrehsicher aufnimmt, da er über Befestigungsschrauben und Feststellschrauben verfügt, sowie über ein Vieleckpassstück am Übergang zur Maschine. So wird ein Verwechseln der Anschüsse ausgeschlossen.

Das Gestell der Anlage ist geschlossen ausgeführt und nimmt die Steuerung auf. Die Steuerung ist bevorzugt als Mikroprozessorsteuerung ausgeführt. In dem geschlossenen Raum sind Komponenten aus Mess-, Steuerungs- und Regelungstechnik angeordnet. Dadurch lassen sich die Medien Luft und Wasser in Menge und Druck für Spülluft, Mahlluft oder Injektorluft sowie für die Gleitringdichtung oder den Kühlkreislauf einstellen. Durch die geschlossene Bauform des Gestells sind die Komponenten gut geschützt untergebracht. Für Wartungsarbeiten kann die Rückwand abgenommen werden.

In einer weiteren Ausführungsform ist die Steuerung mit einer Maschinenerkennung ausgestattet, so dass die Steuerung nach Identifikation der eingesetzten Maschine den zur Steuerung der Maschine notwendigen und zum Teil voreingestellten Parametersatz auswählt. Sie stellt die Grundlage für eine komfortable und sichere Bedienung der Anlage dar. Die Anlage kann über eine Konsole mit Panel bedient werden. Diese Konsole ist in das geschlossene Gestell mit eingearbeitet.

Die Anlage, die wahlweise mit unterschiedlichen Maschinen ausgestattet werden kann, ist für die Aufbereitung von Kleinstmengen ausgelegt. Die zu verarbeitenden Materialmengen liegen im Bereich von 0,5 bis 100 g, bevorzugt im Bereich von 1 bis 10 g. Die Produktausbeute beträgt mehr als 70 %, vorzugsweise mehr als 90 %.

Die erfindungsgemäße Anlage, die sowohl mit Maschinen für die Nass- oder Trockenaufbereitung ausgerüstet werden kann, ist durch Ihre konstruktiven Details einfach zu bedienen. Auf einem Tablett können demontierte Maschinenteile abgelegt und zur Reinigung weggetragen werden.

Ferner ermöglicht eine solche Kompaktanlage das Bearbeiten aller Grundoperationen eines komplexen Produktionsprozesses. Der im Labor entwickelte Prozess kann als Grundlage für eine spätere Validierung des Herstellungsverfahrens für eine Produktionsanlage dienen, da alle Erkenntnisse maßstabsübertragbar sind.

Weitere Einzelheiten, Merkmale und Vorteile des Gegenstandes der Erfindung ergeben sich aus den Unteransprüchen sowie aus der nachfolgenden Beschreibung der zugehörigen Zeichnungen, in der - bespielhaft- ein bevorzugtes Ausführungsbeispiel der Erfindung dargestellt ist. In der Zeichnung zeigt:
- **Figur 1:**: Anlage mit Nassmühle, Rührbehälter und Rührwerk
- **Figur 2:**: Anlage mit Adapter und Bedienkonsole
- **Figur 3:**: Draufsicht auf die Anlage mit Teilschnitt durch den Adapter
- **Figur 4:**: Anlage mit Sichter ausgerüstet mit Tablett und Sperrwand

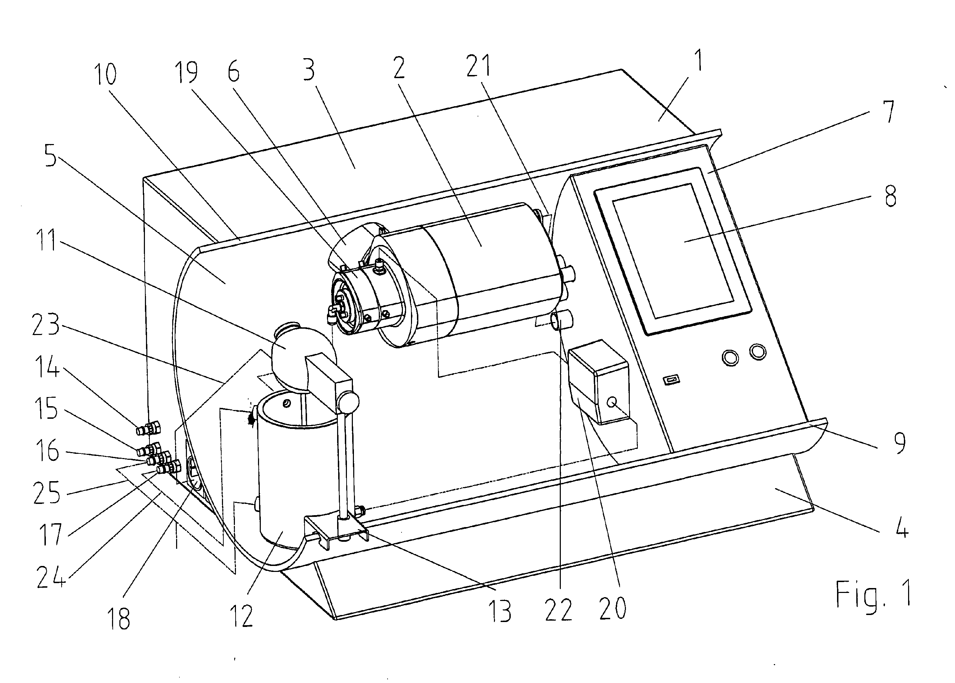

Die Figur 1 zeigt die Anlage (1) mit einer Nassmühle (2). Das Gestell (3) besteht aus Grundgestell (4) und Halbschale (5). Am Gestell (3) ist über einen Adapter (6) die Aufbereitungsmaschine, hier die Nassmühle (2) befestigt. Der Arbeitsbereich der Anlage ist als Halbschale (5) gestaltet. Die Halbschale (5) wird vom Adapter (6) durchbrochen. Sie nimmt an einem Ende die Konsole (7) mit dem Bedienpanel (8) auf. Durch diese Anordnung lässt sich der Arbeitsbereich gut reinigen. Die Kantenleisten (9, 10) -die Enden der Halbschale (5)- dienen zur Befestigung von Anlagenteilen (11, 12) über formschlüssige Halteorgane (13). Im Falle der Ausrüstung der Anlage mit einer Nassmühle sind es Rührwerk (11) und Vorlagebehälter (12).

Das Gestell (3) ist geschlossen ausgeführt, besitzt eine abnehmbare, verschraubbare Rückwand und beinhaltet alle Komponenten der Steuerungs-, Mess- und Regeltechnik. Hier sind die pneumatischen, hydraulischen und elektrischen Bauteile wie Druckregler, Durchflussmessgeräte, Antriebsregler sowie Mikroprozessor der Steuerung angeordnet.

An der Seitenwand des Gestells (3) befinden sich die Anschlüsse (14, 15, 16, 17) für die Arbeitsmedien wie Wasser und Druckluft sowie Steckdosen (18) für Peripheriegeräte wie dem Rührwerk (11). Die zentrale Stromversorgung der Anlage erfolgt über die Rückseite des Gestells (3).

Die Nassmühle (2) besitzt einen Kühlmantel, der die Mahlkammer (19) umgibt, um die bei der Mahlung entstehende Wärme abzuführen. Die Abdichtung zwischen Mahlraum und Antriebseinheit erfolgt über eine Gleitringdichtung. Die inneren Kreisläufe, wie Kühlung der Mahlkammer (19) und Gleitringversorgung mit Sperrflüssigkeit, erfolgen über zuführende und abgehende Bohrungen im Adapter und in der Mühle. Das Arbeitsmedium, hier Wasser, wird der Anlage über den Anschluss (15) zugeführt. Im Inneren des Gestells (3) wird das Arbeitsmedium durch Steuer- und Messkomponenten elektrisch gesteuert der Mühle zugeführt.

Über das Panel (8) welches in der Konsole (7) eingebaut ist, können die verfahrenstechnischen Parameter für die Anlage (1) eingestellt oder verändert werden. Hierüber erfolgt auch die Umschaltung der Steuerung auf eine andere Maschinenvariante. Alternativ kann die Anlage auch mit einer Maschinenerkennung ausgerüstet sein, dann zeigt das Panel die auf die Maschine abgestimmte Steuerung an.

Für den Betrieb der Anlage (1) mit einer Nassmühle (2) werden die Mühle (2), die Schlauchpumpe (20), das Rührwerk (11) sowie Gleitringdichtung und Kühlkreisläufe gesteuert. Die an der Konsole angebaute Schlauchpumpe (20) kommt zum Einsatz wenn das Mahlgut bei einer Kreislaufmahlung zwischen Mühle (2) und Vorlagebehälter (12) im Kreis geführt wird. Der Mühlenmotor ist über ein Kabel (21) mit Steckverbindung (22) mit der Konsole verbunden. Das Rührwerk (11) ist drehzahlregelbar über ein Kabel (23) mit der Steckdose (18) verbunden. Der Vorlagebehälter (12) kann über die Kühlwasserversorgung (24) ausgehend vom gesteuerten Ausgang (17) gekühlt werden. Die Leitung (25) entsorgt den Rückfluss vom Vorlagebehälter (12). Das Kühlwasser zur Kühlung des Mühlenmantels und zur Versorgung der Gleitringdichtung wird über den Adapter (6) zur Mühle (2) und wieder zurückgeführt und zum Anschluss (16) geleitet und zusammen mit dem Kühlwasser aus dem Vorlagebehälter abgeführt.

Alternativ ist die Laboranlage mit einer Trockenaufbereitungsvariante wie Sichter oder Sichtermühle ausgerüstet. Die ebenfalls über den Adapter (6) mit der Anlage verbunden ist. Das benötigten, gasförmige Arbeitsmedium wird der Anlage über den Anschluss (14) zugeführt und über den Adapter (6) der Aufbereitungsmaschine.

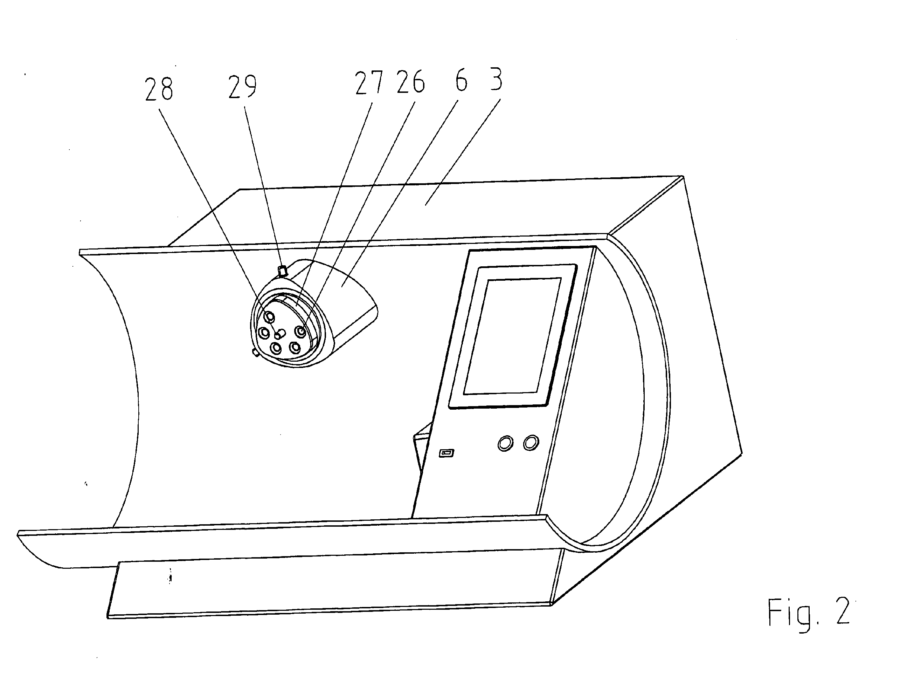

Die Figur 2 zeigt das Gestell (3) mit dem Adapter (6) zur Befestigung der unterschiedlichen Aufbereitungsmaschinen, die wahlweise zur Anwendung kommen können. Im Kern des Adapters (6) führen die zu- und abgehenden Bohrungen (26) mit Kontur zur Dichtungsaufnahme entlang. Hierüber wird die Maschine mit den Arbeitsmedien wie Wasser und Luft versorgt und entsorgt. Die Maschine wird auf dem speziell ausgebildeten Passstück (27) aufgenommen und über die Befestigungsschraube (28) und die Feststellschraube (29) arretiert.

Der Adapter (6) kann so ausgeführt werden, dass die Aufbereitungsmaschine in unterschiedliche Positionen gedreht werden kann, um das Entleeren oder das Montieren zu unterstützen.

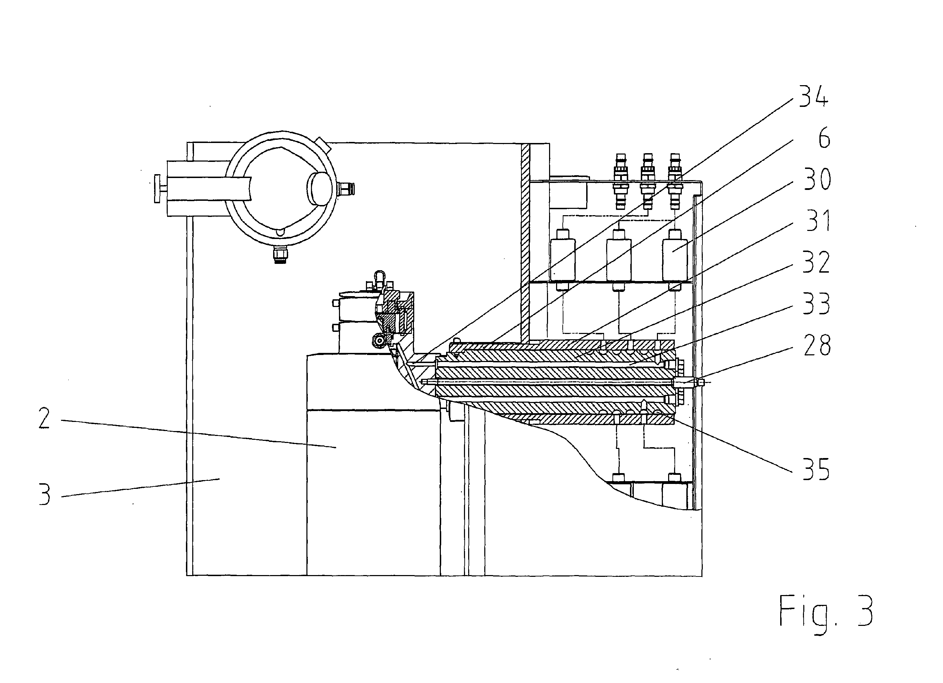

Die Figur 3 zeigt einen Teil die Anlage (1) in der Draufsicht mit Schnitt durch den Adapter (6) und das Gestell. Es sind die pneumatischen und hydraulischen Bauteile (30) im Bereich des geschlossenen Gestells dargestellt. Die verfahrenstechnische Maschine wird vom Adapter (6) gehalten und mit der Schraube (28) befestigt und mit einer Feststellschraube arretiert. Der Adapter (6) besteht aus dem Halterohr (31) und dem Adapterkern (32). In der Draufsicht sind die zuführenden und abgehenden Bohrungen im Adapter (33) und die zuführenden und abgehenden Bohrungen der Mühle (34) sowie die Ringleitung (35) der Drehdurchführung dargestellt.

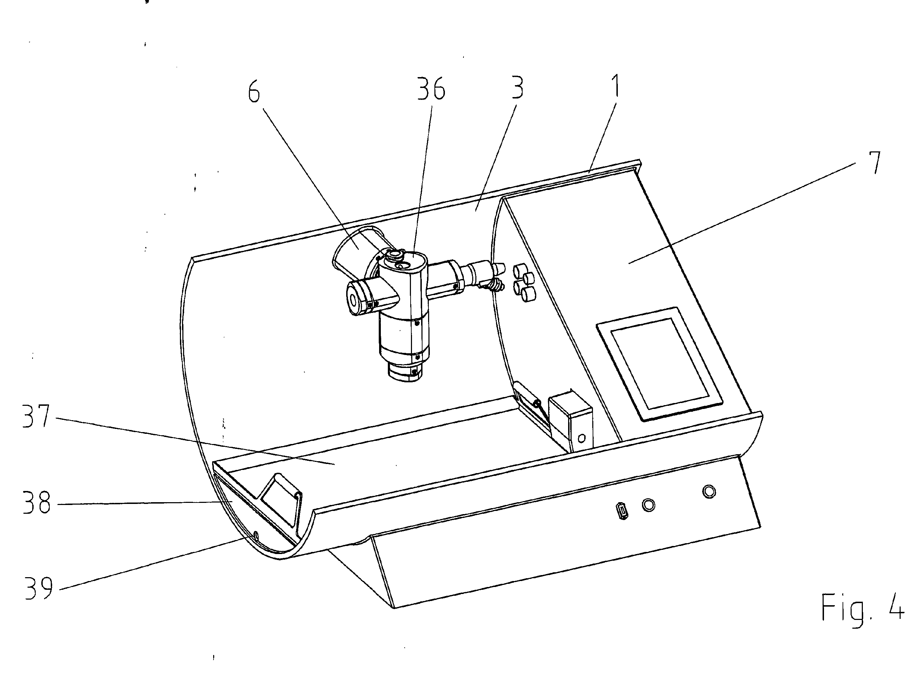

Die Figur 4 zeigt eine Gestellvariante (3) mit Sichter (36), bei der die elektrische Steuerung hauptsächlich in der Konsole (7) eingebaut ist. Die Montage erfolgt hier über die Bodenplatte des Gestells.

In die Halbschale (5) kann ein Tablett (37) eingelegt werden, was die Reinigung, sowie die Montage- und Demontage der Maschine erleichtert. Um besonders bei Reinigungsvorgängen in der Nassaufbereitung austretendes Wasser, Material und Mahlkörper in der Halbschale (5) zu halten, befindet sich an ihrem freien Ende eine Sperrwand (38) mit verschließbarer Öffnung (39) zur geleiteten Entnahme aus der Halbschale. Die Sperrwand (38) dient gleichzeitig zur Aufnahme eines Tabletts (37), das bei Demontage der Maschinen und Transport der Einzelteile zum Reinigungsort sehr hilfreich ist.

### Bezugszeigen

- 1: Anlage
- 2: Nassmühle
- 3: Gestell
- 4: Grundgestell
- 5: Halbschale
- 6: Adapter
- 7: Konsole
- 8: Panel
- 9: Kantenleisten
- 10: Kantenleisten
- 11: Rührwerk / Anlagenteil
- 12: Vorlagebehälter / Anlagenteil
- 13: Halteorgane
- 14: Anschluss (Gas/Luft)
- 15: Anschluss (Flüssigkeit / Wasser)
- 16: Ausgang (interner Kreislauf)
- 17: Ausgang (externer Kreislauf, gesteuert)
- 18: Steckdose (externe Geräte, gesteuert)
- 19: Mahlkammer
- 20: Schlauchpumpe
- 21: Kabel (Antriebsmotor Mühle)
- 22: Steckerverbindung
- 23: Kabel (externe Geräte)
- 24: Kühlwasserversorgung (externer Kreislauf)
- 25: Leitung (Sammelleitung Rückfluss, intern und extern)
- 26: zu- und abführende Bohrungen mit Kontur zur Dichtungsaufnahme
- 27: Passstück zur Aufnahme der Maschinenvariante
- 28: Befestigungsschraube
- 29: Feststellschraube
- 30: pneumatische und hydraulische Bauteile
- 31: Halterohr Adapter
- 32: Adapterkern
- 33: zuführende und abgehende Bohrungen Adapter
- 34: zuführende und abgehende Bohrungen Mühle
- 35: Ringleitung Drehdurchführung
- 36: Sichter
- 37: Tablett
- 38: Sperrwand
- 39: verschließbare Öffnung

## Patentansprüche

1. Verfahrenstechnische Anlage (1), insbesondere für den Laborbetrieb, bestehend aus einem Gestell (3) und mindestens einer Aufbereitungsmaschine (2, 36) **dadurch gekennzeichnet, dass** am Gestell (3) ein Adapter (6) vorhanden ist, an dem wahlweise unterschiedliche Maschinen (2. 36) befestigt werden können, wobei zum Betrieb der Maschinen erforderliche Medien durch den Adapter (6) geführt werden.

2. Anlage (1) nach Anspruch 1 **dadurch gekennzeichnet, dass** wahlweise Maschinen (2,36) zur Trockenaufbereitung oder Nassaufbereitung verwendet werden.

3. Anlage (1) nach Anspruch 2, **dadurch gekennzeichnet, dass** die Aufbereitungsmaschine eine Mühle (2) , ein Sichter (36), eine Sichtermühle oder ein Mischer ist

4. Anlage (1) nach einem oder mehreren der Ansprüche 1 bis 3 **dadurch gekennzeichnet, dass** kontinuierliche oder diskontinuierliche Aufbereitungsprozesse durchgeführt werden.

5. Anlage (1) nach einem oder mehreren der Ansprüche 1 bis 4 **dadurch gekennzeichnet, dass** der Adapter (6) Bohrungen (33) besitzt und drehverstellbar ausgeführt ist.

6. Anlage (1) nach einem oder mehreren der Ansprüche 1 bis 5 **dadurch gekennzeichnet, dass** eine Steuerung, insbesondere Mikroprozessorsteuerung in dem Gestell (3) integriert ist

7. Anlage (1) nach einem oder mehreren der Ansprüche 1 bis 6, **dadurch gekennzeichnet, dass** die Anlage mit einer Steuerung mit Maschinenerkennung ausgeführt ist

8. Anlage (1) nach einem oder mehreren der Ansprüche 1 bis 7, **dadurch gekennzeichnet, dass** das Gestell (3) in geschlossener Form ausgeführt ist, die Bedienkonsole (7), vorzugsweise ein Touch-Panel (8), die Anlagensteuerung, sowie weitere Komponenten aus Mess-, Steuerungs-, Regelungstechnik und Antriebstechnik aufnimmt

9. Anlage (1) nach einem oder mehreren der Ansprüche 1 bis 8 **dadurch gekennzeichnet, dass** weitere Anlagenteile über formschlüssige Halterungen (13) mit dem Gestell (3) verbunden sind

10. Anlage (1) nach einem oder mehreren der Ansprüche 1 bis 9 **dadurch**
**gekennzeichnet, dass** Materialmengen im Bereich von 0,5 bis 100 g, bevorzugt 1 bis 10 g verarbeitet werden können und die Produktausbeute > 70 %, vorzugsweise > 90 % beträgt.
